(19) Europäisches Patentamt
European Patent Office
Office européen des brevets

(11) **EP 3 352 094 A1**

(12) **EUROPEAN PATENT APPLICATION**
published in accordance with Art. 153(4) EPC

(43) Date of publication:
**25.07.2018 Bulletin 2018/30**

(51) Int Cl.:
***G06F 17/30*** *(2006.01)*

(21) Application number: **16845557.4**

(22) Date of filing: **03.06.2016**

(86) International application number:
**PCT/CN2016/084711**

(87) International publication number:
**WO 2017/045443 (23.03.2017 Gazette 2017/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.09.2015 CN 201510589175**

(71) Applicant: **Hangzhou Hikvision Digital Technology Co., Ltd.**
**Hangzhou, Zhejiang 310051 (CN)**

(72) Inventors:
• **CHEN, Changhuai**
  **Hangzhou**
  **Zhejiang 310051 (CN)**
• **PU, Shiliang**
  **Hangzhou**
  **Zhejiang 310051 (CN)**

(74) Representative: **Epping - Hermann - Fischer Patentanwaltsgesellschaft mbH**
**Schloßschmidstraße 5**
**80639 München (DE)**

(54) **IMAGE RETRIEVAL METHOD AND SYSTEM**

(57)    An image retrieval method and system are provided. The method includes: obtaining a target image which is input by a user as a retrieval reference (S101); screening sample images stored in an image database based on a first class of image features of the target image to obtain sample images meeting a first preset condition and outputting the obtained sample images as retrieval results (S102); monitoring whether reference images which are input by the user as retrieval references for further retrieval based on current retrieval results are acquired (S103); if the reference images are acquired, screening sample images stored in the image database based on a second class of image features of the reference images to obtain sample images meeting a second preset condition and outputting the obtained sample images as retrieval results, and continuing the monitoring (S104); and after obtaining an image saving instruction sent by the user based on current retrieval results, saving a retrieval result to which the image saving instruction is directed (S105). The comprehensiveness of image retrieval may be improved with this method.

Fig. 1

## Description

The present application claims the priority to a Chinese patent application No. 201510589175.5, filed with the State Intellectual Property Office of People's Republic of China on September 16, 2015 and entitled "IAMGE RETRIEVAL METHOD AND SYSTEM", which is incorporated herein by reference in its entirety.

## Technical Field

The application relates to the field of image processing technology, and in particular to an image retrieval method and system.

## Background

In an existing image retrieval method, a target image is extracted and provided to an image retrieval system as an inquiry reference; preset image features are extracted from the target image by the image retrieval system; a similarity between the target image and each sample image in an image database is calculated based on the preset image features; and the sample image that has a similarity meeting a preset condition is output as a retrieval result, wherein, the preset condition may include: a similarity being larger than a threshold or a position of a similarity preceding a preset position in the rank of similarities, and so forth.

However, in practice, the target image provided as the inquiry reference by a user only reflects surface features about one aspect of the target object and is vulnerable to many other factors such as background, illumination, imaging quality and the like. As a result, user requirements for retrieval cannot be fully described, and thus retrieved results typically cannot fulfill the expectation of user.

## Summary

Embodiments of the present application are directed to provide an image retrieval method and system in order to improve the comprehensiveness of image retrieval. Specifically, the following solutions are provided.

In a first aspect, an image retrieval method is provided in an embodiment of the present application, including:

obtaining a target image which is input by a user as a retrieval reference;

screening sample images stored in an image database based on a first class of image features of the target image to obtain sample images meeting a first preset condition, and outputting the obtained sample images as retrieval results;

monitoring whether reference images which are input by the user as retrieval references for further retrieval based on current retrieval results are acquired, wherein, the input reference images include at least the sample images in the current retrieval results;

when it is monitored that the reference images which are input by the user as the retrieval references for further retrieval based on current retrieval results are acquired, screening the sample images stored in the image database based on a second class of image features of the reference images to obtain sample images meeting a second preset condition and outputting the obtained sample images as retrieval results, and continuing to monitor whether reference images which are input by the user as retrieval references for further retrieval based on current retrieval results are acquired; and

after obtaining an image saving instruction sent by the user based on current retrieval results, saving a retrieval result to which an the image saving instruction is directed.

Optionally, screening the sample images stored in the image database based on a second class of image features of the reference images to obtain sample images meeting a second preset condition includes:

performing feature fusing processing on the second class of image features of the reference images according to categories of features;

taking a feature fusing result obtained from the feature fusing processing as a corresponding second class of image features of an image to be utilized;

calculating image similarities between the sample images stored in the image database and the image to be utilized based on the second class of features of the image to be utilized; and

screening the image database to obtain sample images having image similarities meeting a preset image similarity condition.

Optionally, screening the sample images stored in the image database based on a second class of image features of the reference images to obtain sample images meeting a second preset condition includes:

calculating image similarities between the sample images stored in the image database and each of the reference images based on the second class of image features of the reference images;

determining sample images having image similarities larger than a preset threshold as candidate retrieval results for each of the reference images;

calculating a fusion similarity of each sample image in the determined candidate retrieval results with respect to all the reference images; and

screening the determined candidate retrieval results to obtain sample images having fusion similarities meeting a preset fusion similarity condition.

Optionally, performing feature fusing processing on the second class of image features of the reference images according to categories of features includes:

performing normalization processing on feature values of the second class of image features of the reference images according to the categories of features;

or,

performing successively normalization processing, weighting processing, a stitching processing, and further normalization processing on feature values of the second class of image features of the reference images according to the categories of features;

or,

performing successively pre-processing and normalization processing on feature values of the second class of image features of the reference images according to the categories of features;

or,

performing successively pre-processing, normalization processing, weighting processing, stitching processing, and further normalization processing on feature values of the second class of image features of the reference images according to the categories of features;

wherein, the pre-processing includes power series suppression processing or logarithm suppression processing.

Optionally, screening the image database to obtain sample images having image similarities meeting a preset image similarity condition includes:

screening the image database to obtain sample images having image similarities larger than a preset similarity threshold;

or,

screening the image database to obtain sample images whose ranking positions precede a preset ranking position in a rank based on image similarity.

Optionally, calculating a fusion similarity of each sample image in the determined candidate retrieval results with respect to all the reference images includes:

calculating the fusion similarity of each sample image in the determined candidate retrieval results with respect to all the reference images by using a preset maximum method, a preset weighted average method or a preset weight multiplication method.

Optionally, screening the determined candidate retrieval results to obtain sample images having fusion similarities meeting a preset fusion similarity condition includes:

screening the determined candidate retrieval results to obtain sample images having fusion similarities larger than a preset fusion similarity threshold;

or,

screening the determined candidate retrieval results to obtain sample images whose ranking positions precede a preset ranking position in a rank based on fusion similarity.

In a second aspect, an image retrieval system is provided in an embodiment of the present application, including:

a target image obtaining module, an initial retrieval module including an initial retrieval sub-module and an initial result outputting sub-module, a monitoring module, a further retrieval module including a further retrieval sub-module and a further result outputting sub-module, and an image saving module;

wherein,

the target image obtaining module is configured to obtain a target image which is input by a user as a retrieval reference;

the initial retrieval sub-module is configured to screen sample images stored in an image database based on a first class of image features of the target image to obtain sample images meeting a first preset condition;

the initial result outputting sub-module is configured to output the obtained sample images as retrieval results;

the monitoring module is configured to monitor whether reference images which are input by the user as retrieval references for further retrieval based on current retrieval results are acquired, wherein, the input reference images include at least the sample images in the current retrieval results;

the further retrieval sub-module is configured to screen the sample images stored in the image database based on a second class of image features of the reference images to obtain sample images meeting a second preset condition when it is monitored that the reference images which are input by the user as the retrieval references for further retrieval based on current retrieval results are acquired;

the further result outputting sub-module is configured to output the obtained sample images as retrieval results, and to trigger the monitoring module to continue to monitor whether reference images which are input by the user as retrieval references for further retrieval based on current retrieval results are acquired; and

the image saving module is configured to after obtaining an image saving instruction sent by the user based on current retrieval results, save a retrieval result to which an the image saving instruction is directed.

Optionally, the further retrieval sub-module includes:

a fusing processing unit configured to perform feature fusing processing on the second class of image features of the reference images according to categories of features when it is monitored that the reference images which are input by the user as the retrieval references for further retrieval based on the retrieval results are acquired;

an image feature determining unit configured to take a feature fusing result obtained from the feature fusing processing as a corresponding second class of image features of an image to be utilized;

a first image similarity calculating unit configured to calculate image similarities between the sample images stored in the image database and the image to be utilized based on the second class of image features of the image to be utilized; and

a first sample image screening unit configured to screen the image database to obtain sample images having image similarities meeting a preset image similarity condition.

Optionally, the further retrieval sub-module includes:

a second image similarity calculating unit configured to calculate image similarities between the sample images stored in the image database and each of the reference images based on the second class of image features of the reference images;

a candidate retrieval result determining unit configured to determine sample images having image similarities larger than a preset threshold as candidate retrieval results for each of the reference images;

a fusing similarity calculating unit configured to calculate a fusion similarity of each sample image in the determined candidate retrieval results with respect to all the reference images; and

a second sample image screening unit configured to screen the determined candidate retrieval results to obtain sample images having fusion similarities meeting a preset fusion similarity condition.

Optionally, the fusing processing unit is configured to:

perform normalization processing on feature values of the second class of image features of the reference images according to the categories of features;

or,

perform successively normalization processing, weighting processing, stitching processing, and further normalization processing on feature values of the second class of image features of the reference images according to the categories of features;

or,

perform successively pre-processing and normalization processing on feature values of the second class of image features of the reference images according to the categories of features;

or,

perform successively pre-processing, normalization processing, weighting processing, stitching processing, and further normalization processing on feature values of the second class of image features of the reference images according to the categories of features;

wherein, the pre-processing includes power series suppression processing or logarithm suppression processing.

Optionally, the first sample image screening unit is configured to:

screen the image database to obtain sample images having image similarities larger than a preset similarity threshold; or,

screen the image database to obtain sample images whose ranking positions precede a preset ranking position in a rank based on image similarity.

Optionally, the fusing similarity calculating unit is configured to:

calculate a fusion similarity of each sample image in the determined candidate retrieval results with respect to all the reference images by using a preset maximum method, a preset weighted average method or a preset weight multiplication method.

Optionally, the second sample image screening unit is configured to:

screen the determined candidate retrieval results to obtain sample images having fusion similarities larger than a preset fusion similarity threshold;

or,

screen the determined candidate retrieval results to obtain sample images whose ranking positions precede a preset ranking position in a rank based on fusion similarity.

In a third aspect, a storage medium is provided in an embodiment of the present application, which stores an application program which, when being executed, performs the image retrieval method of embodiments of the present application.

In a fourth aspect, an application program is provided in an embodiment of the present application, which performs the image retrieval method of embodiments of the present application when being executed.

In a fifth aspect, an electronic device is provided in an embodiment of the present application, including a processor, a memory, a communication interface, and a bus, wherein,

the processor, the memory, and the communication bus are connected and communicate with each other through the bus; the memory is configured to store executable program codes;

the processor is configured to execute a program corresponding to the executable program codes by reading the executable program codes stored in the memory to perform the image retrieval method of embodiments of the present application.

In the image retrieval method of the embodiment of the present application, a target image which is input by a user as a retrieval reference is obtained; sample images stored in an image database are screened based on a first class of image features of the target image to obtain sample images meeting a first preset condition, and the obtained sample images are output as retrieval results; it is monitored whether reference images which are input by the user as retrieval references for further retrieval based on current retrieval results are acquired; if the reference images are acquired, the sample images stored in the image database are screened based on a second class of image features of the reference images to obtain sample images meeting a second preset condition and the obtained sample images are output as retrieval results, and the monitoring is continued; and after an image saving instruction sent by the user based on current retrieval results is obtained, a retrieval result to which the image saving instruction is directed is saved. In contrast to prior art, the present application may conduct multiple retrievals, instead of one retrieval, based on one target image input by the user. Thus, the comprehensiveness of image retrieval is improved, and the user may have a better image retrieval experience.

**Brief Description of the Drawings**

To describe the solutions of embodiments of the application and the prior art more clearly, the accompanying drawings to be used in the embodiments and the prior art are described briefly below. Obviously, the accompanying drawings described below merely reflect some embodiments of the application. Those skilled in the art can obtain other drawings according to these drawings without creative efforts.

Fig. 1 is a flow chart of an image retrieval method provided according to an embodiment of the present application;

Fig. 2 is another flow chart of an image retrieval method provided according to an embodiment of the present application;

Fig. 3 is another flow chart of an image retrieval method provided according to an embodiment of the present application;

Fig .4 is a structural schematic view of an image retrieval system provided according to an embodiment of the present application.

**Detailed Description**

The present application will be illustrated in further detail in combination of the following embodiments with reference to the drawings in order to provide a thorough understanding of the objective, solutions, and benefits thereof. Obviously, the embodiments described are only some embodiments of the present application, but are not all embodiments of the present application. All other embodiments obtained from the embodiments of the present application by those skilled in the art without creative efforts fall within scope of the present application.

To improve the comprehensiveness of image retrieval, an image retrieval method and system is provided in embodiments of the present application.

First, an image retrieval method provided according to an embodiment of the present application is presented below.

The image retrieval method according to the embodiment of the present application may be applied in an electronic device and performed by an image retrieval system.

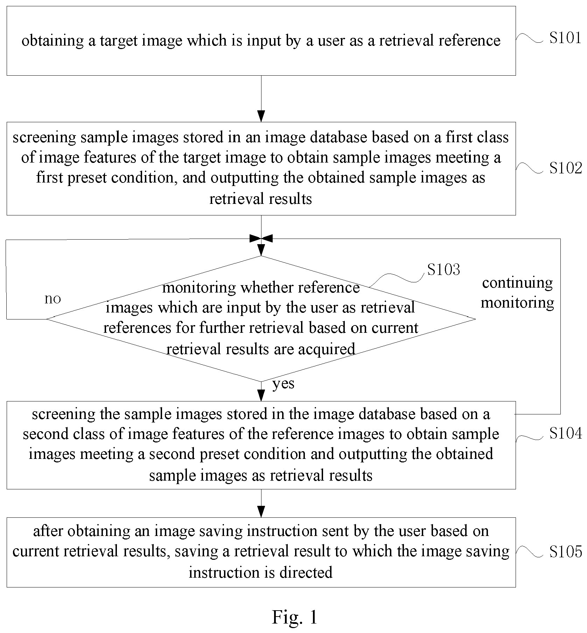

As shown in Fig. 1, an image retrieval method is provided according to an embodiment of the present application, including S101-S105.

S101. Obtaining a target image which is input by a user as a retrieval reference.

The image retrieval system may provide an interaction interface for the user. The target image as the retrieval reference may be input by the user through the interaction interface.

In addition, the target image input by the user may be an image selected by the user from images locally stored on an electronic device, or an image captured by an image capture function provided by the electronic device. These are all reasonable.

S102. Screening sample images stored in an image database based on a first class of image features of the target image to obtain sample images meeting a first preset condition and outputting the obtained sample images as retrieval results.

After the target image which is input by the user as the retrieval reference is obtained, the image database may be screened based on the first class of image features of the target image to obtain sample images meeting the first preset condition, and the obtained sample images are output as retrieval results, so as to achieve image retrieval.

The first class of image features of the target image may include one or more of BoW (bags of words), FV (fisher vector), VLAD (vector of locally aggregated descriptors), CN (color names), SIFT (scale invariant feature transform), Gabor filtering features, SURF, various color spaces (such as, RGB, HSV, and Lab) histogram.

Specifically, obtaining sample images meeting a first preset condition from sample images stored in an image database based on a first class of image features of the target image may include:

calculating similarities between the target image and the sample images stored in the image database based on the first class of image features of the target image;

screening the sample images stored in the image database to obtain sample images having similarities meeting a preset similarity condition.

The preset similarity condition may include, an image similarity of a sample image with the target image being larger than a preset similarity threshold, a ranking position of a sample image preceding a preset ranking position in a rank based on image similarity, or the like. There are all reasonable.

It is noted that the first class of image features of the target image may be obtained in a manner of local feature extraction or global feature extraction. The local feature extraction is to extract features of a local image area of the target image, and the global feature extraction is to extract features of all image areas of the target image. In addition, the calculation of similarities between the target image and the sample images stored in the image database based on the first class of image features of the target image can be implemented by various technologies. For example, when similarities of images are being calculated based on local features, since each image may have a different number of corresponding local features, the similarities may be calculated by pairwise comparison of local features. The nearest neighbor in another image is found for each local feature in one image, and then the average of all the similarities between all of the local features and corresponding nearest neighbors in another image is calculated as the similarity between the two images. When the similarities of images are calculated based on global features, Euclidean distance, chi-square distance, Histogram cross-core distance and the like may be used.

S103. Monitoring whether reference images which are input by the user as retrieval references for further retrieval based on current retrieval results are acquired. If so, S104 is performed, or otherwise, the monitoring is continued.

In order to improve the comprehensiveness of image retrieval, after the obtained sample images are output as the retrieval results, an input function for further retrieval may be provided for a user so that the user may conduct a further retrieval when current retrieval results are not satisfactory. As a result, after the obtained sample images are output as the retrieval results, it may be monitored whether reference images, which are input by the user based on current retrieval results, as the retrieval references for further retrieval are acquired, and when it is monitored that the reference images are acquired, S104 is performed to initiate the further retrieval.

The input reference images may include at least the sample images in current retrieval results. Of course, the input reference images may also include the target image previously input or an image other than the target image and current retrieval results. All these are reasonable.

S104. Obtaining sample images meeting a second preset condition from the sample images stored in the image database based on a second class of image features of the reference images, and outputting the obtained sample images as retrieval results.

A further retrieval may be performed when it is monitored that reference images which are input by the user as retrieval references for further retrieval based on current retrieval results are acquired. Specifically, the sample images stored in the image database may be screened based on a second class of image features of the target image to obtain sample images meeting a second preset condition, and the obtained sample images are output as retrieval results. After the obtained sample images are output as the retrieval results, it may be monitored whether reference images, which are input by the user based on current retrieval results, as retrieval references for further retrieval are acquired, so that the further retrieval can be performed circularly till the retrieval results are satisfactory to the user.

The reference image may include at least one image, and the second class of image features of any reference image may have the same category as the first class of image features of the target image, or may have a different category from the first class of image features of the target image. There are reasonable.

It is noted that the screening of the sample images stored in the image database based on a second class of image features of the reference images to obtain sample images meeting a second preset condition may be implemented in various ways. For clarity of description, two specific implementations of screening the sample images stored in the image database based on a second class of image features of the reference images to obtain sample images meeting a second preset condition will be described in detail in conjunction with specific embodiments hereinafter.

S105. After obtaining an image saving instruction sent by the user based on current retrieval results, saving a retrieval result to which the image saving instruction is directed.

Each time when the retrieval results are output, image saving buttons can be provided in an output interface for the retrieval results, so that the user sends an image saving instruction by clicking on an image saving button when a retrieval result is satisfactory. As such, after an image saving instruction sent by the user based on current retrieval results is obtained, a retrieval result to which the image saving instruction is directed is saved. Of course, each time when the retrieval results are output, prompt information informing the user of an operation required to send the image saving instruction may also be presented in the output interface for the retrieval results, wherein, the operation required may include clicking on a button, making a preset gesture or the like.

In the image retrieval method of the embodiment of the present application, a target image which is input by a user as a retrieval reference is obtained; sample images stored in an image database are screened based on a first class of image features of the target image to obtain sample images meeting a first preset condition, and the obtained sample images are output as retrieval results; it is monitored whether reference images which are input by the user as retrieval references for further retrieval based on current retrieval results are acquired; if the reference images are acquired, the sample images stored in an image database are screened based on a second class of image features of the reference images to obtain sample images meeting a second preset condition and the obtained sample images are output as retrieval results, and the monitoring is continued; and after an image saving instruction sent by the user based on current retrieval results is obtained, a retrieval result to which the image saving instruction is directed is saved. In contrast to the prior art, the present application may conduct multiple retrievals, instead of one retrieval, based on one image input by the user. Thus, the comprehensiveness of image retrieval is improved, and the user may have a better image retrieval experience.

An image retrieval method provided in the present application will be illustrated below in conjunction with the following specific embodiment.

The image retrieval method provided according to the embodiment of the present application may be applied to an electronic device, and performed in an image retrieval system.

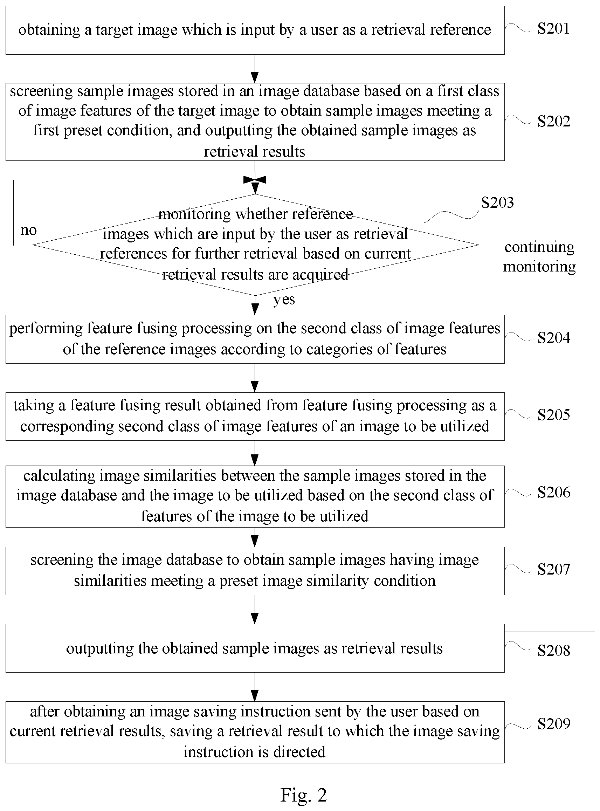

As shown in Fig. 2, the image retrieval method may include S201-S209.

S201. Obtaining a target image which is input by a user as a retrieval reference.

S202. Screening sample images stored in an image database based on a first class of image features of the target image to obtain sample images meeting a first preset condition and outputting the obtained sample images as retrieval results.

S203. Monitoring whether reference images which are input by the user as retrieval references for further retrieval based on current retrieval results are acquired. If so, S204 is performed, or otherwise, the monitoring is continued.

The input reference images may include at least the sample images in the current retrieval results.

S201-S203 in this embodiment are similar to S101-S103 in the previous embodiment, the details of which are thus omitted here.

S204. Performing feature fusing processing on a second class of image features of the reference image according to categories of features.

S205. Taking a feature fusing result obtained from the feature fusing processing as a corresponding second class of image features of an image to be utilized.

After it is monitored that the reference images which are input by the user as the retrieval references for further retrieval based on current retrieval results are acquired, feature fusing processing is performed on the second class of image features of the reference images according to categories of features, and the feature fusing result obtained from the feature fusing processing is taken as the second class of image features of the image to be utilized, wherein, each category of the second class of image features of the image to be utilized is the feature fusing result of corresponding category of the second class of image features of at least one reference image. In one example, the second class of image features of each of reference image 1, reference image 2, and reference image 3 includes a feature of category A and a feature of category B. For subsequent further retrieval, the features of category A of the reference image 1, reference image 2, and reference image 3 may be subject to feature fusing processing and the features of category B of the reference image 1, reference image 2, and reference image 3 may be subject to feature fusing processing, in order to obtain the feature of category A and the feature of category B of the image to be utilized. The feature value of the feature of category A of the image to be utilized is determined based on feature values of features of category A of the reference images 1, 2 and 3, and the feature value of the feature of category B of the image to be utilized is determined based on feature values of features of category B of the reference images 1, 2 and 3.

Specifically, performing feature fusing processing on a second class of image features of the reference images according to categories of features may include:

> performing normalization processing on feature values of the second class of image features of the reference images according to the categories of features;
> or,
> performing successively normalization processing, weighting processing, stitching processing, and further normalization processing on feature values of the second class of image features of the reference images according to the categories of features;
> or,
> performing successively pre-processing and normalization processing on feature values of the second class of image features of the reference images according to the categories of features;
> or,
> performing successively pre-processing, normalization processing, weighting processing, stitching processing, and further normalization processing on feature values of the second class of image features of the reference images according to the categories of features.

The pre-processing may include power series suppression processing or logarithm suppression processing.

The normalization processing may include L1-norm normalization, L2-norm normalization, minimum and maximum normalization, and the like.

Taking the L2-norm normalization as an example, it is assumed that there are K categories of features $F_1, F_2, ... F_i, ..., F_k$, $F_i = \{f_{i,1}, f_{i,2}, ..., f_{i,j}, ..., f_{i,n_i}\}$, wherein, $n_i$ is the dimension of the *ith* category of feature, $f_{i,j}$ is the feature value of the *jth* dimension of the *ith* category of image feature, and the formula used in the pre-processing is:

$$f_{i,j} = (f_{i,j})^p$$

or

$$f_{i,j} = \log_q f_{i,j}$$

wherein, p is an index of the power series suppression, q is a base of the logarithm suppression.

The feature value of each category of image feature may be normalized in the following formula:

$$f'_{i,j} = \frac{w_i f_{i,j}}{\sqrt{\sum_{j=1}^{n_i}(f_{i,j})^2}}, i = 1, 2, ..., K$$

wherein, $w_i$ is the weight of the *ith* category of image feature.

After the normalization, a stitching may be performed to form $F' = [F'_1, F'_2, F'_3, ...F'_i, ..., F'_k]$, so that, for F', the feature values of image features may be normalized in the following formula, the normalized feature value is taken as a feature value of a corresponding image feature of the image to be utilized:

$$f''_{i,j} = \frac{f_{i,j}}{\sqrt{\sum_{i=1}^{K}\sum_{j=1}^{n_i}(f'_{i,j})^2}}, i = 1, 2, ..., K, j = 1, 2, ..., n_i$$

wherein, the stitching of image features may be implemented by using existing technologies.

S206. Calculating image similarities between the sample images stored in the image database and the image to be utilized based on the second class of image features of the image to be utilized.

The image similarities between the sample images stored in the image database and the image to be utilized may be calculated based on the second class of image features of the image to be utilized, after the second class of image features of the image to be utilized is determined.

Specifically, the calculation of the image similarities between the sample images stored in the image database and the image to be utilized based on the second class of image features of the image to be utilized can be implemented by using existing technologies.

S207. Screening the image database to obtain sample images having image similarities meeting a preset image similarity condition.

S208. Outputting the obtained sample images as retrieval results.

After the image similarities between the sample images stored in the image database and the image to be utilized are calculated, the image database may be screened to obtain sample images have image similarities meeting a preset similarity condition, and the obtained sample images may be output as retrieval results. Further, after the obtained sample images are output as the retrieval results, whether reference images, input by the user based on current retrieval results, as references for further retrieval are acquired may be continued to be monitored, so that the further retrieval can be performed circularly till the retrieval result is satisfactory to the user.

Specifically, screening the image database to obtain sample images having image similarities meeting a preset image similarity condition may include:

screening the image database to obtain sample images having image similarities larger than a preset similarity threshold;
or,

screening the image database to obtain sample images whose ranking positions precede a preset ranking position in a rank based on image similarity.

The preset similarity threshold and the preset position may be set according to actual needs, and are not limited here.

S209. After obtaining an image saving instruction sent by the user based on current retrieval results, saving a retrieval result to which the image saving instruction is directed.

Each time when the retrieval results are output, image saving buttons can be provided in an output interface for the retrieval results, so that the user sends an image saving instruction when a retrieval result is satisfactory. As such, after an image saving instruction sent by the user based on current retrieval results is obtained, a retrieval result to which the image saving instruction is directed is saved.

In contrast to the prior art, the present application may conduct multiple retrievals, instead of one retrieval, based on one target image input by the user. Thus, the comprehensiveness of image retrieval is improved, and the user may have a better image retrieval experience.

An image retrieval method provided in the present application will be illustrated below in conjunction with another specific embodiment.

The image retrieval method provided in the embodiment of the present application may be applied to an electronic device, and performed in an image retrieval system.

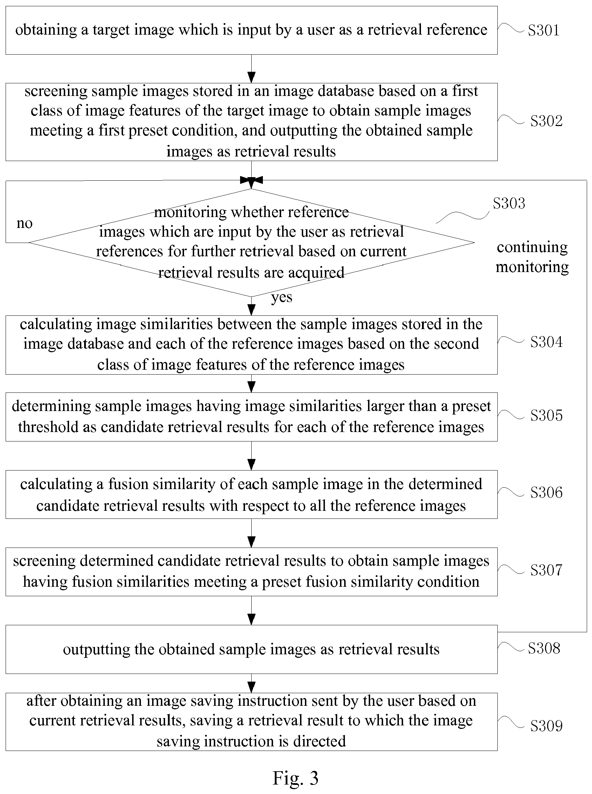

As shown in Fig. 3, the image retrieval method may include:

S301. Obtaining a target image which is input by a user as a retrieval reference.

S302. Screening sample images stored in an image database based on a first class of image features of the target image to obtain sample images meeting a first preset condition and outputting the sample images as retrieval results.

S303. Monitoring whether reference images which are input by the user as retrieval references for further retrieval based on current retrieval results are acquired. If so, S304 is performed, or otherwise, the monitoring is continued.

The input reference images may include at least the sample images in the current retrieval results.

S301-S303 in this embodiment are similar to S101-S103 in the previous embodiment, the details of which are thus omitted here.

S304. Calculating image similarities between the sample images stored in the image database and each of the reference images based on a second class of image features of this reference image.

After the reference images are obtained, the image similarities between the sample images stored in the image database and each of the reference images may be calculated based on the second class of image features of this reference image. The calculation of image similarities between the sample images stored in the image database and each of the reference images may be implemented by using existing technology and is thus omitted herein.

S305. Determining sample images having image similarities larger than a preset threshold as candidate retrieval results for each of the reference images.

The sample images having image similarities larger than a preset threshold may be determined as candidate retrieval results for a corresponding reference image after the image similarities between the sample images stored in the image database and the corresponding reference image is calculated. That is, each reference image corresponds to a group of candidate retrieval results, which is a list of image results.

The number of images in a group of candidate retrieval results for each reference image may be less than or equal to the number of images in the image database. It is appreciated that the required number of images may be reached by setting a predetermined threshold.

S306. Calculating a fusion similarity of each sample image in the determined candidate retrieval results with respect to all the reference images.

As each reference image corresponds to a group of candidate retrieval results, a large number of images may need to be output. In order to output a limited number of sample images, after the candidate retrieval results for each reference image are determined, the fusion similarity of each sample image in the determined candidate retrieval results with respect to all the reference images may be calculated.

Specifically, calculating a fusion similarity of each sample image in the determined candidate retrieval results with respect to all the reference images may include:

calculating the fusion similarity of each sample image in the determined candidate retrieval results with respect to all the reference images by using a preset maximum method, a preset weighted average method or a preset weight multiplication method.

For example, each reference image corresponds to a group of candidate retrieval results (i.e., a list of image results). Assuming that the ranking position and image similarities of the sample images are contained in the list of image results, wherein, lists of image results for M reference images is shown as follows:

$$L = \{L_1, L_2, ..., L_i, ..., L_M \mid L_i = [(s_{i,1}, ID_{i,1}), (s_{i,2}, ID_{i,2}), ..., (s_{i,j}, ID_{i,j}), ..., (s_{i,N}, ID_{i,N})]\}$$

Wherein, N is the number of images in the image database, $S_{i,j}$ and $ID_{i,j}$ are respectively the image similarity and ranking position of the *jth* sample image in the list of image results for the *ith* reference image. In the list of image results for each reference image, the *jth* sample image is the same sample. A preset maximum method, a preset weighted average method, preset weight multiplication method and the like may be used to calculate the fusion similarity of each sample image in the determined candidate retrieval results with respect to all the reference images. Assuming that $\widetilde{s_{i,j}}$ is the image similarity between the *jth* sample image in the image database and the *ith* reference image, the preset maximum method may be performed in the following formula:

$$s_j^{'} = \max_{i=1,2,...,M} \widetilde{s_{i,j}}, j = 1, 2, ..., N$$

The preset weighted average method may be performed in the following formula:

$$s_j^{'} = \frac{1}{M} * \sum_{i=1}^{i=M} w_{i,j} f(\widetilde{s_{i,j}}), j = 1, 2, ..., N$$

The preset weight multiplication method may be performed in the following formula:

$$s_j^{'} = \prod_{i=1}^{i=M} f(\widetilde{s_{i,j}}), j = 1, 2, ..., N$$

Wherein, $s_j^{'}$ is the fusion similarity of the *jth* sample image with respect to all the reference images, $w_{i,j}$ is a weight related to the ranking position of $\widetilde{s_{i,j}}$ in the list $L_i$ of image results, $f(\widetilde{s_{i,j}})$ is a scoring function related to the ranking position of $\widetilde{s_{i,j}}$ in the list $L_i$ of image results and the image similarity between the *jth* sample image and the *ith* reference image.

S307. Screening the determined candidate retrieval results to obtain sample images having fusion similarities meeting a preset fusion similarity condition.

S308. Outputting the obtained sample images as retrieval results.

After the fusion similarity of each sample image in the determined candidate retrieval results with respect to all the reference images is calculated, the determined candidate retrieval results may be screened to obtain the sample images having fusion similarities meeting a preset fusion similarity condition, and the obtained sample images are output as retrieval results. Further, after the obtained sample images are output as retrieval results, whether reference images, which are input by the user based on current retrieval results, as retrieval references for further retrieval are acquired may continue to be monitored, so that further retrieval can be performed circularly till the retrieval results are satisfactory to the user.

Specifically, screening the determined candidate retrieval results to obtain sample images having fusion similarities meeting a preset fusion similarity condition may include:

screening the determined candidate retrieval results to obtain sample images having fusion similarities larger than a preset fusion similarity threshold;
or,
screening the determined candidate retrieval results to obtain sample images whose ranking positions precede a preset ranking position in a rank based on fusion similarity.

The preset fusion similarity threshold and the preset ranking position may be set according to actual needs, and are not limited here.

S309. After obtaining an image saving instruction sent by the user based on current retrieval results, saving a retrieval result to which the image saving instruction is directed.

Each time when the retrieval results are output, image saving buttons can be provided in an output interface for the retrieval results, so that the user sends an image saving instruction when a retrieval result is satisfactory. As such, after an image saving instruction sent by the user based on current retrieval results is obtained, a retrieval result to which the image saving instruction is directed is saved.

In contrast to the prior art, the present application may conduct multiple retrievals, instead of one retrieval, based on one target image input by the user. Thus, the comprehensiveness of image retrieval is improved, and the user may have a better image retrieval experience.

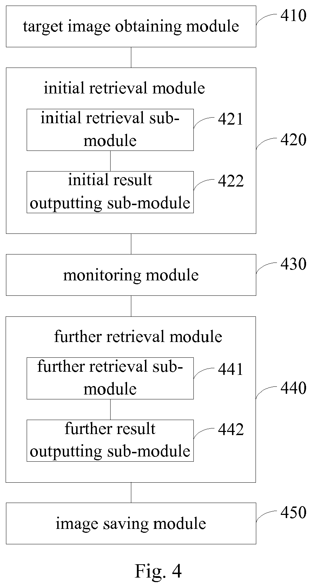

In correspondence with the method embodiments above, an image retrieval system is provided in an embodiment of the present application. As shown in Fig. 4, the system includes:
a target image obtaining module 410, an initial retrieval module 420, a monitoring module 430, a further retrieval module 440, and an image saving module 450. The initial retrieval module 420 includes an initial retrieval sub-module 421 and an initial result outputting sub-module 422, and the further retrieval module 440 includes a further retrieval sub-module 441 and a further result outputting sub-module 442.

The target image obtaining module 410 is configured to obtain a target image which is input by a user as a retrieval reference.

The initial retrieval sub-module 421 is configured to obtain sample images meeting a first preset condition from sample images stored in an image database based on a first class of image features of the target image.

The initial result outputting sub-module 422 is configured to output the obtained sample images as retrieval results.

The monitoring module 430 is configured to monitor whether reference images which are input by the user as retrieval references for further retrieval based on current retrieval results are acquired, wherein, the input reference images include at least the sample images in the current retrieval results.

The further retrieval sub-module 441 is configured to obtain sample images meeting a second preset condition from the sample images stored in the image database based on a second class of image features of the reference images when it is monitored that the reference images which are input by the user as the retrieval references for further retrieval based on current retrieval results are acquired.

The further result outputting sub-module 442 is configured to output the obtained sample images as retrieval results, and to trigger the monitoring module to continue to monitor whether reference images which are input by the user as the retrieval references for further retrieval based on current retrieval results are acquired.

The image saving module 450 is configured to after obtaining an image saving instruction sent by the user based on current retrieval results, save a retrieval result to which the image saving instruction is directed.

In the image retrieval system of the embodiment of the present application, a target image which is input by a user as a retrieval reference is obtained; sample images stored in an image database are screened based on a first class of image features of the target image to obtain sample images meeting a first preset condition and the obtained sample images are output as retrieval results; it is monitored whether reference images which are input by the user as retrieval references for further retrieval based on current retrieval results are acquired; if the reference images are acquired, the sample images stored in an image database are screened based on a second class of image features of the reference images to obtain sample images meeting a second preset condition and the obtained sample images are output as retrieval results, and the monitoring is continued; and after an image saving instruction sent by the user based on current retrieval results is obtained, a retrieval result to which the image saving instruction is directed is saved. In contrast to the prior art, the present application may conduct multiple retrievals, instead of one retrieval, based on one target image input by the user. Thus, the comprehensiveness of image retrieval is improved, and the user may have a better image retrieval experience.

In a first implementation, the further retrieval sub-module 441 may include:

a fusing processing unit configured to perform feature fusing processing on the second class of image features of the reference images according to categories of features when it is monitored that the reference images which are input by the user as the retrieval references for further retrieval based on current retrieval results are acquired;

an image feature determining unit configured to take a feature fusing result obtained from the feature fusing processing as a corresponding second class of image features of an image to be utilized;

a first image similarity calculating unit configured to calculate image similarities between the sample images stored in the image database and the image to be utilized based on the second class of features of the image to be utilized; and

a first sample image screening unit configured to screen the image database to obtain sample images having image similarities meeting a preset image similarity condition.

In a second implementation, the further retrieval sub-module 441 may include:

a second image similarity calculating unit configured to calculate the image similarities between the sample images stored in the image database and each of the reference images based on the second class of image features of the reference images when it is monitored that the reference images which are input by the user as the retrieval references for further retrieval based on current retrieval results are acquired;

a candidate retrieval results determining unit configured to determine sample images having image similarities larger than a preset threshold as candidate retrieval results for each of the reference images;

a fusing similarity calculating unit configured to calculate a fusion similarity of each sample image in the determined candidate retrieval results with respect to all the reference images; and

a second sample image screening unit configured to screen the determined candidate retrieval results to obtain sample images having fusion similarities meeting a preset fusion similarity condition.

In the first implementation described above, the fusing processing unit is configured to:

perform normalization processing on feature values of the second class of image features of the reference images according to the categories of features;

or,

perform successively normalization processing, weighting processing, stitching processing, and further normalization processing on feature values of the second class of image features of the reference images according to the categories of features;

or,

perform successively pre-processing and normalization processing on feature values of the second class of image features of the reference images according to the categories of features;

or,

perform successively pre-processing, normalization processing, weighting processing, stitching processing, and further normalization processing on feature values of the second class of image features of the reference images according to the categories of features.

The pre-processing may include power series suppression processing or logarithm suppression processing.

In the second implementation described above, the first sample image screening unit is configured to:

screen the image database to obtain sample images having image similarities larger than a preset similarity threshold;

or,

screen the image database to obtain sample images whose ranking positions precede a preset ranking position in a rank based on image similarity.

In the second implementation described above, the fusing similarity calculating unit is configured to:

calculate a fusion similarity of each sample image in the determined candidate retrieval results with respect to all the reference images by using a preset maximum method, a preset weighted average method or a preset weight multiplication method.

In the second implementation described above, the second sample image screening unit is configured to:

screen the determined candidate retrieval results to obtain sample images having fusion similarities larger than a preset fusion similarity threshold;

or,

screen the determined candidate retrieval results to obtain sample images whose ranking positions precede a preset ranking position in a rank based on fusion similarity.

In correspondence with the method embodiments above, a storage medium is provided in an embodiment of the present application. The storage medium stores an application program which, when being executed, performs the image retrieval method of embodiments of the present application. Specifically, the image retrieval method may include:

obtaining a target image which is input by a user as a retrieval reference;

screening sample images stored in an image database based on a first class of image features of the target image to obtain sample images meeting a first preset condition and outputting the obtained sample images as retrieval results;

monitoring whether reference images which are input by the user as retrieval references for further retrieval based on current retrieval results are acquired, wherein, the input reference images includes at least the sample images in the current retrieval results;

when it is monitored that the reference images which are input by the user as the retrieval references for further retrieval based on current retrieval results are acquired, obtaining sample images meeting a second preset condition from the sample images stored in the image database based on a second class of image features of the reference images and outputting the obtained sample images as retrieval results, and then continuing to monitor whether reference images which are input by the user as the retrieval references for further retrieval based on current retrieval results are acquired; and

after obtaining an image saving instruction sent by the user based on current retrieval results, saving a retrieval result to which the image saving instruction is directed.

In the embodiment, the storage medium stores an application program which, when being executed, performs the image retrieval method of embodiments of the present application, so that multiple retrievals, instead of one retrieval, may be conducted based on one target image input by the user. Thus, the comprehensiveness of image retrieval is improved, and the user may have a better image retrieval experience.

In correspondence with the method embodiments above, an application program is provided in an embodiment of the present application. The application program, when being executed, performs the image retrieval method of embodiments of the present application. Specifically, the image retrieval method may include:

obtaining a target image which is input by a user as a retrieval reference;

screening sample images stored in an image database based on a first class of image features of the target image to obtain sample images meeting a first preset condition and outputting the obtained sample images as retrieval results;

monitoring whether reference images which are input by the user as retrieval references for further retrieval based on current retrieval results are acquired, wherein, the input reference images include at least the sample images in the current retrieval results;

when it is monitored that the reference images which are input by the user as the retrieval references for further retrieval based on current retrieval results are acquired, screening the sample images stored in the image database based on a second class of image features of the reference images to obtain sample images meeting a second preset condition and outputting the obtained sample images as retrieval results, and continuing to monitor whether reference images which are input by the user as retrieval references for further retrieval based on current retrieval results are acquired; and

after obtaining an image saving instruction sent by the user based on current retrieval results, saving a retrieval result to which the image saving instruction is directed.

In the embodiment, the application program, when being executed, performs the image retrieval method of embodiments of the present application, so that multiple retrievals, instead of one retrieval, may be conducted based on one target image input by the user. Thus, the comprehensiveness of image retrieval is improved, and the user may have a better image retrieval experience.

In correspondence with the method embodiments above, an electronic device is provided in an embodiment of the present application. The electronic device includes: a processor, a memory, a communication interface, and a bus; the processor, the memory, and the communication bus are connected and communicate with each other through the bus; the memory is configured to store executable program codes;

the processor is configured to execute a program corresponding to the executable program codes by reading the executable program codes stored in the memory to perform the image retrieval method of embodiments of the present application. Specifically, the image retrieval method may include:

obtaining a target image which is input by a user as a retrieval reference;
screening sample images stored in an image database based on a first class of image features of the target image to obtain sample images meeting a first preset condition and outputting the obtained sample images as retrieval results;
monitoring whether reference images which are input by the user as retrieval references for further retrieval based on current retrieval results are acquired, wherein, the input reference images include at least the sample images in the current retrieval results;
when it is monitored that the reference images which are input by the user as the retrieval references for further retrieval based on current retrieval results are acquired, screening the sample images stored in the image database based on a second class of image features of the reference images to obtain sample images meeting a second preset condition and outputting the obtained sample images as retrieval results, and continuing to monitor whether reference images which are input by the user as retrieval references for further retrieval based on current retrieval results are acquired; and

after obtaining an image saving instruction sent by the user based on current retrieval results, saving a retrieval result to which the image saving instruction is directed.

In the embodiment, a processor of the electronic device reads the executable program codes stored in the memory to execute a program corresponding to the executable program codes. The program, when being executed, performs the image retrieval method of embodiments of the present application, so that multiple retrievals, instead of one retrieval, may be conducted based on one target image input by the user. Thus, the comprehensiveness of image retrieval is improved, and the user may have a better image retrieval experience.

The electronic device can exist in many forms, including but not limited to:

(1) mobile communication device: this type of device is characterized by having mobile communication functions, with a primary purposes to provide voice and data communication. Such terminals include: smart phones (e.g., iPhone), multimedia phones, functional phones, low-end phones and the like.

(2) ultra-mobile personal computer device: this type of device belongs to the category of personal computers, has computing and processing functions, and generally also has mobile network properties. Such terminals include: PDA, MID, UMPC (e.g., iPad) and the like.

(3) portable entertainment device: this type of device can display and play multimedia contents. Such devices include: audio and video players (e.g., iPod), PALM, ebooks, and smart toys and portable onboard navigation devices.

(4) server: it is a device that provide computing service. The compositions of the server include a processor, a hard disk, a RAM, and a system bus. The architecture of the server is similar to that of a general computer. The server has relatively high requirements in terms of processing capacity, stability, reliability, security, expandability, manageability and the like due to the provision of highly reliable service.

(5) other electronic devices that have a data interaction function.

The embodiments of the electronic device, application program and storage medium are described briefly, because the methods involved in these embodiments are substantially similar to the method embodiments previously described. Relevant parts can be well understood with reference to explanations in the method embodiments.

It should be noted that in the claims and the specification, relationship terms such as "first," "second" and the like are only used to distinguish one entity or operation from another entity or operation, and do not necessarily require or imply that there is any such actual relationship or order between those entities or operations. Moreover, the terms "include," "comprise" or any other variants are intended to cover a non-exclusive inclusion, such that processes, methods, objects or devices including a series of elements include not only those elements, but also other elements not specified or the elements inherent to those processes, methods, objects or devices. Without further limitations, elements limited by the phrase "comprise(s) a... " and " include(s) a..." do not exclude that there are other identical elements in the processes, methods, objects or devices that include those elements.

It should be noted that various embodiments herein adopt corresponding ways for description. The same or similar parts in various embodiments can be referred to one another, and each embodiment is focused on the differences from other embodiments. In particular, for the embodiments of the system, since they are similar to embodiments of the method, the description thereof is relatively simple. The relating parts could refer to the parts of the description of embodiments of the method.

Embodiments described above are just preferred embodiments of the present application, and not intended to limit the scope of the present invention. Any modifications, equivalent, improvement or the like within the spirit and principle of the present invention should be included in the scope of the present invention.

**Claims**

1. An image retrieval method, comprising:

obtaining a target image which is input by a user as a retrieval reference;
screening sample images stored in an image database based on a first class of image features of the target image to obtain sample images meeting a first preset condition, and outputting the obtained sample images as retrieval results;

monitoring whether reference images which are input by the user as retrieval references for further retrieval based on current retrieval results are acquired, wherein, the input reference images comprise at least the sample images in the current retrieval results;

when it is monitored that the reference images which are input by the user as the retrieval references for further retrieval based on current retrieval results are acquired, screening the sample images stored in the image database based on a second class of image features of the reference images to obtain sample images meeting a second preset condition and outputting the obtained sample images as retrieval results, and continuing to monitor whether reference images which are input by the user as retrieval references for further retrieval based on current retrieval results are acquired; and

after obtaining an image saving instruction sent by the user based on current retrieval results, saving a retrieval result to which the image saving instruction is directed.

2. The method of claim 1, wherein, screening the sample images stored in the image database based on a second class of image features of the reference images to obtain sample images meeting a second preset condition comprises:

performing feature fusing processing on the second class of image features of the reference images according to categories of features;

taking a feature fusing result obtained from the feature fusing processing as a corresponding second class of image features of an image to be utilized;

calculating image similarities between the sample images stored in the image database and the image to be utilized based on the second class of features of the image to be utilized; and

screening the image database to obtain sample images having image similarities meeting a preset image similarity condition.

3. The method of claim 1, wherein, screening the sample images stored in the image database based on a second class of image features of the reference images to obtain sample images meeting a second preset condition comprises:

calculating image similarities between the sample images stored in the image database and each of the reference images based on the second class of image features of the reference images;

determining sample images having image similarities larger than a preset threshold as candidate retrieval results for each of the reference images;

calculating a fusion similarity of each sample image in the determined candidate retrieval results with respect to all the reference images; and

screening the determined candidate retrieval results to obtain sample images having fusion similarities meeting a preset fusion similarity condition.

4. The method of claim 2, wherein, performing feature fusing processing on the second class of image features of the reference images according to categories of features comprises:

performing normalization processing on feature values of the second class of image features of the reference images according to the categories of features;
or,
performing successively normalization processing, weighting processing, stitching processing, and further normalization processing on feature values of the second class of image features of the reference images according to the categories of features;
or,
performing successively pre-processing and normalization processing on feature values of the second class of image features of the reference images according to the categories of features;
or,
performing successively pre-processing, normalization processing, weighting processing, stitching processing, and further normalization processing on feature values of the second class of image features of the reference images according to the categories of features;
wherein, the pre-processing comprises power series suppression processing or logarithm suppression processing.

**5.** The method of claim 2, wherein, screening the image database to obtain sample images having image similarities meeting a preset image similarity condition comprises:

screening the image database to obtain sample images having image similarities larger than a preset similarity threshold ;
or,
screening the image database to obtain sample images whose ranking positions precede a preset ranking position in a rank based on image similarity.

**6.** The method of claim 3, wherein, calculating a fusion similarity of each sample image in the determined candidate retrieval results with respect to all the reference images comprises:
calculating the fusion similarity of each sample image in the determined candidate retrieval results with respect to all the reference images by using a preset maximum method, a preset weighted average method or a preset weight multiplication method.

**7.** The method of claim 3, wherein, screening the determined candidate retrieval results to obtain sample images having fusion similarities meeting a preset fusion similarity condition comprises:

screening the determined candidate retrieval results to obtain sample images having fusion similarities larger than a preset fusion similarity threshold;
or,
screening the determined candidate retrieval results to obtain sample images whose ranking positions precede a preset ranking position in a rank based on fusion similarity.

**8.** An image retrieval system, comprising:

a target image obtaining module, an initial retrieval module comprising an initial retrieval sub-module and an initial result outputting sub-module, a monitoring module, a further retrieval module comprising a further retrieval sub-module and a further result outputting sub-module, and an image saving module;
wherein,
the target image obtaining module is configured to obtain a target image which is input by a user as a retrieval reference;
the initial retrieval sub-module is configured to screen sample images stored in an image database based on a first class of image features of the target image to obtain sample images meeting a first preset condition;
the initial result outputting sub-module is configured to output the obtained sample images as retrieval results;
the monitoring module is configured to monitor whether reference images which are input by the user as retrieval references for further retrieval based on current retrieval results are acquired, wherein, the input reference images comprise at least the sample images in the current retrieval results;
the further retrieval sub-module is configured to screen the sample images stored in the image database based on a second class of image features of the reference images to obtain sample images meeting a second preset condition when it is monitored that the reference images which are input by the user as the retrieval references for further retrieval based on current retrieval results are acquired;
the further result outputting sub-module is configured to output the obtained sample images as retrieval results, and to trigger the monitoring module to continue to monitor whether reference images which are input by the user as retrieval references for further retrieval based on current retrieval results are acquired; and
the image saving module is configured to after obtaining an image saving instruction sent by the user based on current retrieval results, save a retrieval result to which the image saving instruction is directed.

**9.** The system of claim 8, wherein, the further retrieval sub-module comprises:

a fusing processing unit configured to perform feature fusing processing on the second class of image features of the reference images according to categories of features when it is monitored that the reference images which are input by the user as the retrieval references for further retrieval based on current retrieval results are acquired;
an image feature determining unit configured to take a feature fusing result obtained from the feature fusing processing as a corresponding second class of image features of an image to be utilized;
a first image similarity calculating unit configured to calculate image similarities between the sample images stored in the image database and the image to be utilized based on the second class of image features of the image to be utilized; and
a first sample image screening unit configured to screen the image database to obtain sample images having image similarities meeting a preset image similarity condition.

**10.** The system of claim 8, wherein, the further retrieval sub-module comprises:

a second image similarity calculating unit configured to calculate image similarities between the sample images stored in the image database and each of the reference images based on the second class of image features of the reference images, when it is monitored that the reference images which are input by the user as the retrieval references for further retrieval based on current retrieval results are acquired;
a candidate retrieval result determining unit configured to determine sample images having image similarities larger than a preset threshold as candidate retrieval results for each of the reference images;
a fusing similarity calculating unit configured to calculate a fusion similarity of each sample image in the determined candidate retrieval results with respect to all the reference images; and
a second sample image screening unit configured to screen the determined candidate retrieval results to obtain sample images having fusion similarities meeting a preset fusion similarity condition.

**11.** The system of claim 9, wherein, the fusing processing unit is configured to:

perform normalization processing on feature values of the second class of image features of the reference images according to the categories of features;
or,
perform successively normalization processing, weighting processing, stitching processing, and further normalization processing on feature values of the second class of image features of the reference images according to the categories of features;
or,
perform successively pre-processing and normalization processing on feature values of the second class of image features of the reference images according to the categories of features;
or,
perform successively pre-processing, normalization processing, weighting processing, stitching processing, and further normalization processing on feature values of the second class of image features of the reference images according to the categories of features;
wherein, the pre-processing comprises power series suppression processing or logarithm suppression processing.

**12.** The system of claim 9, wherein, the first sample image screening unit is configured to:

screen the image database to obtain sample images having image similarities larger than a preset similarity threshold;
or,
screen the image database to obtain sample images whose ranking positions precede a preset ranking position in a rank based on image similarity.

**13.** The system of claim 10, wherein, the fusing similarity calculating unit is configured to:
calculate a fusion similarity of each sample image in the determined candidate retrieval results with respect to all the reference images by using a preset maximum method, a preset weighted average method or a preset weight multiplication method.

**14.** The system of claim 10, wherein, the second sample image screening unit is configured to:

screen the determined candidate retrieval results to obtain sample images having fusion similarities larger than a preset fusion similarity threshold;
or,
screen the determined candidate retrieval results to obtain sample images whose ranking positions precede a preset ranking position in a rank based on fusion similarity.

**15.** A storage medium for storing an application program which, when being executed, performs the image retrieval method of any one of claims 1-7.

**16.** An application program which performs the image retrieval method of any one of claims 1-7 when being executed.

**17.** An electronic device, comprising a processor, a memory, a communication interface, and a bus, wherein, the processor, the memory, and the communication bus are connected and communicate with each other through the bus;
the memory is configured to store executable program codes;
the processor is configured to execute a program corresponding to the executable program codes by reading the executable program codes stored in the memory, to perform the image retrieval method of any one of claims 1-7.

obtaining a target image which is input by a user as a retrieval reference ⌐∿ S101

screening sample images stored in an image database based on a first class of image features of the target image to obtain sample images meeting a first preset condition, and outputting the obtained sample images as retrieval results ⌐∿ S102

S103

no ⟵ monitoring whether reference images which are input by the user as retrieval references for further retrieval based on current retrieval results are acquired

continuing monitoring

yes

screening the sample images stored in the image database based on a second class of image features of the reference images to obtain sample images meeting a second preset condition and outputting the obtained sample images as retrieval results ⌐∿ S104

after obtaining an image saving instruction sent by the user based on current retrieval results, saving a retrieval result to which the image saving instruction is directed ⌐∿ S105

Fig. 1

obtaining a target image which is input by a user as a retrieval reference ⌐∿ S201

screening sample images stored in an image database based on a first class of image features of the target image to obtain sample images meeting a first preset condition, and outputting the obtained sample images as retrieval results ⌐∿ S202

monitoring whether reference images which are input by the user as retrieval references for further retrieval based on current retrieval results are acquired ⌐∿ S203

no

continuing monitoring

yes

performing feature fusing processing on the second class of image features of the reference images according to categories of features ⌐∿ S204

taking a feature fusing result obtained from feature fusing processing as a corresponding second class of image features of an image to be utilized ⌐∿ S205

calculating image similarities between the sample images stored in the image database and the image to be utilized based on the second class of features of the image to be utilized ⌐∿ S206

screening the image database to obtain sample images having image similarities meeting a preset image similarity condition ⌐∿ S207

outputting the obtained sample images as retrieval results ⌐∿ S208

after obtaining an image saving instruction sent by the user based on current retrieval results, saving a retrieval result to which the image saving instruction is directed ⌐∿ S209

Fig. 2

obtaining a target image which is input by a user as a retrieval reference — S301

screening sample images stored in an image database based on a first class of image features of the target image to obtain sample images meeting a first preset condition, and outputting the obtained sample images as retrieval results — S302

monitoring whether reference images which are input by the user as retrieval references for further retrieval based on current retrieval results are acquired — S303

no

continuing monitoring

yes

calculating image similarities between the sample images stored in the image database and each of the reference images based on the second class of image features of the reference images — S304

determining sample images having image similarities larger than a preset threshold as candidate retrieval results for each of the reference images — S305

calculating a fusion similarity of each sample image in the determined candidate retrieval results with respect to all the reference images — S306

screening determined candidate retrieval results to obtain sample images having fusion similarities meeting a preset fusion similarity condition — S307

outputting the obtained sample images as retrieval results — S308

after obtaining an image saving instruction sent by the user based on current retrieval results, saving a retrieval result to which the image saving instruction is directed — S309

Fig. 3

target image obtaining module ⌐ 410

initial retrieval module

    initial retrieval sub-module ⌐ 421

    initial result outputting sub-module ⌐ 422

⌐ 420

monitoring module ⌐ 430

further retrieval module

    further retrieval sub-module ⌐ 441

    further result outputting sub-module ⌐ 442

⌐ 440

image saving module ⌐ 450

Fig. 4

# INTERNATIONAL SEARCH REPORT

| International application No. |
| --- |
| PCT/CN2016/084711 |

## A.   CLASSIFICATION OF SUBJECT MATTER

G06F 17/30 (2006.01) i

According to International Patent Classification (IPC) or to both national classification and IPC

## B.   FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI: image, figure, pic, picture, object, aim, search, find, charact+, filt+, order+, sort+, class +, category, again, restart

## C.   DOCUMENTS CONSIDERED TO BE RELEVANT

| Category* | Citation of document, with indication, where appropriate, of the relevant passages | Relevant to claim No. |
| --- | --- | --- |
| X | CN 104699726 A (HANGZHOU HIKVISION DIGITAL TECHNOLOGY CO., LTD.) 10 June 2015 (10.06.2015) claims 1-18, description, paragraphs [0026]-[0090], and figures1 and 2 | 1-17 |
| A | CN 104090972 A (BEIJING NORMAL UNIVERSITY) 08 October 2014 (08.10.2014) the whole document | 1-17 |
| A | CN 102402575 A (BEIJING INST TECHNOLOGY) 04 April 2012 (04.04.2012) the whole document | 1-17 |
| A | CN 101419606 A (ZHEJIANG UNIVERSITY) 29 April 2009 (29.04.2009) the whole document | 1-17 |
| A | US 2007203972 A1 (EUTECH CYBERNETICS) 30 August 2007 (30.08.2007) the whole document | 1-17 |

☐ Further documents are listed in the continuation of Box C.          ☒ See patent family annex.

| *         Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
| --- | --- |
| 08 August 2016 | 30 August 2016 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LIU, Yongxin Telephone No. (86-10) 62413965 |
| --- | --- |

Form PCT/ISA /210 (second sheet) (July 2009)

**INTERNATIONAL SEARCH REPORT**
Information on patent family members

| | International application No. |
|---|---|
| | PCT/CN2016/084711 |

| Patent Documents referred in the Report | Publication Date | Patent Family | Publication Date |
|---|---|---|---|
| CN 104699726 A | 10 June 2015 | None | |
| CN 104090972 A | 08 October 2014 | None | |
| CN 102402575 A | 04 April 2012 | None | |
| CN 101419606 A | 29 April 2009 | CN 101419606 B | 05 October 2011 |
| US 2007203972 A1 | 30 August 2007 | AU 2003214770 A1 | 02 September 2003 |
| | | WO 03067361 A3 | 18 March 2004 |
| | | WO 03067361 A2 | 14 August 2003 |
| | | US 7587459 B2 | 08 September 2009 |
| | | US 2003149728 A1 | 07 August 2003 |
| | | AU 2003214770 A8 | 27 October 2005 |

Form PCT/ISA /210 (patent family annex) (July 2009)

**EP 3 352 094 A1**

**REFERENCES CITED IN THE DESCRIPTION**

**Patent documents cited in the description**

- CN 201510589175